# FASCICULE DE BREVET EUROPEEN

(11) **EP 3 387 075 B1**
(45) Date de publication et mention de la délivrance du brevet: **04.03.2020**
(21) Numéro de dépôt: 16763900.4
(22) Date de dépôt: 09.08.2016
(51) Int. Cl.: C09D 11/00, C09D 151/00, C09B 67/22, C09B 67/40, C09B 67/00, C08F 220/18, C08F 290/06, C09D 7/45, C09D 133/14

(54) **CONCENTRÉ LIQUIDE DE PARTICULES SOLIDES DE PIGMENTS HYBRIDES CONTENANT DES COPOLYMÈRES GREFFÉS ET LEUR UTILISATION POUR LA PRÉPARATION DE PEINTURES EN MILIEU AQUEUX ET/OU ORGANIQUE**
FLÜSSIGES KONZENTRAT FESTER PARTIKEL AUS HYBRIDEN PIGMENTEN MIT GEPFROPFTEN COPOLYMEREN UND VERWENDUNG DAVON ZUR HERSTELLUNG VON LACKEN IN EINEM WÄSSRIGEN UND/ODER ORGANISCHEN MEDIUM
LIQUID CONCENTRATE OF SOLID PARTICLES OF HYBRID PIGMENTS CONTAINING GRAFTED COPOLYMERS AND USE OF SAME FOR PREPARING PAINTS IN AN AQUEOUS AND/OR ORGANIC MEDIUM

(30) Priorité: 11.12.2015 FR 1562188
(43) Date de publication de la demande: 17.10.2018
(73) Titulaire: Coloris Global Coloring Concept, 06270 Villeneuve-Loubet (FR)
(72) Inventeur: LEFEVRE, Daniel, 13400 Aubagne (FR); DUFOUR, Michel, 06250 Mougins (FR)
(74) Mandataire: Cabinet Beau de Loménie
(86) Numéro de dépôt international: PCT/FR2016/052056
(87) Numéro de publication internationale: WO 2017/098095

(56) Documents cités:
- WO-A1-97/28200
- WO-A1-02/081581

## Description

L'invention concerne des concentrés de colorants pigmentaires constitués de pigments hybrides comprenant des particules minérales complexées à des pigments ou molécules organiques colorants dénommés « pigments hybrides ». Les dits concentrés comprennent des copolymères greffés qui sont dits « universels », c'est à dire mélangeables ou compatibles avec des milieux en solvant organique aussi bien qu'aqueux, le dit copolymère comprenant au moins trois séquences de natures chimiques distinctes, parmi lesquelles au moins une séquence d'ancrage sur des particules solides consistant dans des charges minérales, au moins une séquence à caractère hydrophobe et au moins une séquence à caractère hydrophile.

On entend ici par « séquence à caractère hydrophile » ou « séquence à caractère hydrophobe » que ladite séquence est plus hydrophile ou respectivement plus hydrophobe que les deux autres dites séquences.

L'invention concerne également un procédé de préparation de peinture, encre ou revêtements liquide à l'aide desdits concentrés liquides de dites particules charges minérales.

Dans lesdits concentrés liquides de colorants pigmentaires, lesdits copolymères sont utilisés en tant qu'agent dispersant et/ou mouillant et/ou stabilisant de particules solides et/ou émulsifiant et/ou compatibilisant dans un milieu aqueux et/ou organique, pour la préparation de peintures ou encres en milieu aqueux et/ou organique.

Au terme de leur procédé de fabrication, les colorants pigmentaires utilisées se présentent sous la forme d'agrégats ou d'agglomérats. Leur incorporation dans un liquide, afin d'obtenir une suspension stable, nécessite donc au préalable une étape de dispersion, étape au cours de laquelle ces assemblages sont dissociés en particules élémentaires sous l'effet d'importantes contraintes mécaniques. L'action de ces forces mécaniques ne saurait cependant être efficace en l'absence d'un agent dispersant.

L'invention concerne des concentrés universels ou multicompatibles (en milieux aqueux ou solvants divers) de colorants pigmentaires constitués de particules solides hybrides à la fois minérales et organiques de tailles intermédiaire de 0,5 à 2 µm contenant des copolymères greffés spécifiques.

Ces concentrés doivent présentent une concentration pigmentaire élevée et une rhéologie adaptée à leur utilisation dans le processus de dosage automatique en usine et sur les lieux de vente.

L'invention concerne aussi un procédé de préparation de peintures, encres, revêtements liquides et matières plastiques liquides à l'aide desdits concentrés de particules de grande taille.

On a décrit dans le brevet WO 97/28200 de tels copolymères « universels » dans des concentrés de pigments colorants minéraux ou organiques usuels de tailles inférieure à 0.5 µm afin de préparer des peintures en milieu aqueux ou milieu solvant.

Ces copolymères greffés sont donc utilisés en tant qu'agents dispersants et / ou stabilisants de particules solides et / ou émulsifiant dans un milieu aqueux et / ou organique, et / ou comptabilisant dans un milieu aqueux et / ou organique.

En tant qu'agent dispersant de particules solides dans un milieu aqueux et / ou organique, les copolymères facilitent et complètent la dispersion mécanique par un bon mouillage des particules par la phase continue, et en éliminant le film d'air qui les entoure.

Ces copolymères, interviennent à chaque étape de la dispersion. Dans un premier temps, ils assurent un bon mouillage de la particule par la phase continue, en remplaçant le film d'air entourant la surface du solide par des molécules de liquide. Ensuite, ils améliorent sensiblement le rendement du dissolveur/broyeur lors de la phase de désagglomération des agglomérats.

Pour être efficace, un copolymère utilisable en tant que dispersant doit donc comporter une séquence d'ancrage, présentant une bonne affinité pour la surface des particules, ainsi qu'une ou plusieurs séquence(s) compatible(s) avec la phase continue dans laquelle ces solides sont incorporés. En l'absence d'un de ces constituants, ou en cas de désorption du dispersant, on assiste à la floculation du système, phénomène qui se manifeste par la réagglomération des particules, et une augmentation de viscosité de la dispersion. Dans le cas particulier d'une peinture, une mauvaise dispersion des charges minérales au sein du liant se traduit par une sédimentation rapide des agglomérats de charges dans la peinture avec une augmentation de sa viscosité. En outre, on constate une chute d'opacité et du pouvoir couvrant de la peinture et une diminution du brillant de surface et de la durabilité dans le temps du film de peinture.

En tant qu'agent stabilisant de particules solides dans un milieu aqueux et / ou organique, les copolymères s'adsorbent à la surface du solide et enrobent les particules et constituent une couche de copolymères solvatée à l'origine de forces de répulsion stériques, ainsi que, dans le cas de polyélectrolytes en milieu aqueux, des forces de répulsion électrostatiques, qui s'opposent aux forces attractives de Van der Waals, assurant ainsi la stabilité de la dispersion. Il faut donc que la séquence d'ancrage soit adsorbée fortement à la surface de la particule solide par exemple par des liaisons de Van der Waals et que l'une des deux autres séquences respectivement hydrophile et hydrophobe, se développe pour créer des forces de répulsion stérique et/ou de répulsion électrostatique selon le milieu d'utilisation.

En tant qu'agent émulsifiant dans un milieu aqueux et / ou organique, lorsque la phase continue d'une dispersion de particules solides n'est pas miscible avec la phase continue de la peinture qui la reçoit, les copolymères facilitent et complètent l'émulsification mécanique de la phase continue de la première dans la seconde. L'effet émulsifiant du copolymère se développe dès que le copolymère possède des séquences hydrophiles et hydrophobes suffisamment longues et nombreuses pour se déployer chacune dans son milieu d'affinité respectif, eau / solvant organique. La séquence d'ancrage joue peu de rôle dans l'effet émulsifiant.

En tant qu'agent compatibilisant de préparation de dispersion de particules solides dans un milieu aqueux et / ou organique vis à vis des autres constituants de la peinture. L'effet compatibilisant du copolymère est optimisé si les conditions de l'effet stabilisant et de l'effet émulsifiant sont réunies.

La pluralité de fonctions chimiques au sein d'un même copolymère, ainsi que la possibilité de formuler des dispersions de particules solides sans résine d'allongement et / ou sans agent tensio actifs, améliorent la compatibilité avec les résines, autorisant ainsi la formulation de peintures à partir d'une large gamme de liants en phase aqueuse et / ou organique.

Ces copolymères contiennent une séquence permettant leur ancrage sur les particules solides, ainsi qu'au moins 2 séquences à caractère respectivement hydrophile/hydrosoluble et hydrophobe/organosoluble, autorisant leur emploi dans les compositions en milieu aqueux et/ou organique. La présence d'une séquence insoluble en milieu sélectif augmente de manière surprenante la quantité de dispersant adsorbée à la surface des particules, évitant ainsi le phénomène de floculation lors du mélange de différents pigments.

Les séquences d'ancrage sont de préférence réalisées par copolymérisation radicalaire de monomères comprenant des monomères éthyléniques portant des groupements azotés basiques, ces monomères azotés étant disposés statistiquement le long de chaîne.

Dans WO97/28200, on a proposé à titre de séquence d'ancrage de copolymériser les monomères azotés cités ci-dessus avec un ou plusieurs monomère(s) éthylénique(s) insaturé(s) neutre(s). Lorsque l'on cherche à modifier certaines propriétés, comme la température de transition vitreuse, la stabilité ou encore les propriétés mécaniques. Toutefois, dans les exemples de réalisation préférés spécifiques, les séquences d'ancrage ne comprennent que des monomères éthyléniques comprenant des groupements azotés, à l'exclusion de tout autre monomère.

Dans WO97/28200, les copolymères greffés préférés ont été développés spécialement pour réaliser des concentrés liquides de colorants pigmentaires usuels soit minéraux soit organiques de petites tailles (inférieur à 0.5 µm) et comprennent :
- une chaîne principale d'ancrage sur les particules solides comportant des groupements (méth)acrylate de dialkylaminoéthyle, 2-vinylpyridine, 4-vinylpyridine, N,N-diméthylacrylamide, seuls ou en mélange,
- un ou plusieurs greffons hydrophiles de méthacrylate de poly(oxyde d'éthylène), et
- un ou plusieurs greffons hydrophobes à base de (méth)acrylates d'alkyle, d'esters vinyliques seuls ou copolymérisés avec des dérivés styréniques et alkylstyrèniques, des monomères fluorés (méthacrylate de trifluoroéthyle), ou du méthacrylate de 3-(trimethoxysilyl)propyle.

Dans WO02/081581 on a décrit des concentrés liquides de charges minérales incolores épaississantes et opacifiantes du type carbonate, silicate, sulfate et silices comprenant des copolymères spécifiques pour de telles charges minérales incolores épaississantes, utilisées dans les peintures, qui soient appropriées pour la fabrication modulaire de peinture, c'est à dire avec des extraits secs de dites charges minérales incolores représentant une teneur pondérale supérieure ou égale à 65 % en poids du concentré liquide. Lesdites charges minérales incolores dans une peinture sont le constituant principal avec le liant ; elles apportent une structure épaisse microporeuse et opaque, et confèrent à la peinture un état de surface spécifique mat, satiné ou brillant. Et, une peinture doit comporter de préférence au moins 45 à 50 % d'extrait sec de ces charges minérales incolores.

Outre les structures cristallographiques et natures chimiques particulières des composés minéraux concernés, ces charges minérales incolores, sont de grandes tailles supérieures à 2 µm et se distinguent des pigments colorants minéraux utilisés pour la coloration des peintures qui sont de tailles inférieures à 0.5 µm.

WO 02/081581 définit une famille restreinte de copolymères greffés décrits dans le premier brevet avantageux pour la préparation de concentrés liquides de charges à extrait sec pondéral d'au moins 65% utilisables pour la fabrication de peintures par assemblage desdits concentrés.

Les applications classiques décrites dans ces deux brevets consistent donc à disperser soit (a) des pigments de diamètre moyen équivalent compris entre 20 et 500 nm pour les colorants soit (b) des charges ou solides fibreux de diamètre moyen équivalent supérieur à 2 µm pour les concentré de charges ou solides fibreux. Les copolymères greffés utilisés dans ces deux types d'applications sont caractérisés par leur structure chimique et leur fourchette de masses moléculaires. Ils se distinguent les uns des autres par la nature et le nombre des groupes chimiques de la chaîne principale d'ancrage, le nombre, la nature et la longueur des chaines hydrophiles et le nombre, la nature et la longueur des chaines hydrophobes.

Les particules hybrides selon la présente invention dont la taille moyenne est intermédiaire compris entre 500 nm (0,5 µm) et 2 µm ont nécessité un choix adapté de copolymères greffés afin de préparer des concentrés de particules optimisés pour leur multi compatibilité, leur concentration élevée, leur stabilité au stockage et leur rhéologie.

Les particules pigmentaires hybrides ou composites utilisables dans des formulations liquides ou coulables telles que les peintures, revêtements, matières plastiques et encres se trouvant dans la fourchette de diamètres moyens compris entre 500 nm à 2µm selon la présente invention comprennent plus particulièrement :
- des pigments naturels d'origine mixte minérale et organique végétale connus sous la dénomination « pigments mayas » tels que décrits dans WO2008097837, WO2009092104, WO2009112646 et WO2009114541 entre autres, ainsi que
- des particules de complexes de pigments réfléchissants les rayonnements infra rouge (IR) complexés à des pigments colorants organiques chimiques usuels de petites tailles.

La complexation des pigments colorants organiques et pigments réfléchissants les IR résulte de leur structure chimique et notamment de la grande concentration en groupe OH à leur surface.

Les pigments naturels d'origine mixte minérale et organique végétale connues sous la dénomination «pigments mayas» sont constitués de particules minérales à structure creuse ou poreuse, notamment sous forme de fibres creuses remplies des pigments colorants organiques d'origine végétale. On connait notamment des particules minérales d'argile sous forme de fibres creuses de 1 à 2 µm dénommées sépiolite. Les parois de la particule minérale creuse forment une coque de protection vis-à-vis des pigments colorants organiques qu'elle contient.

Les pigments réfléchissants les IR présentent la propriété de diminuer l'échauffement des surfaces exposées au rayonnement solaire lorsque les surfaces sont revêtues de la dite peinture en contenant des dits pigments réfléchissants les IR. D'autre part, de par leur nature faiblement opacifiante, ils n'affectent pas la couleur du pigment colorant auquel ils sont complexés selon la présente invention. On connait notamment des particules réfléchissants les IR d'oxyde de titane sous forme cristalline dite de type rutile.

Ces particules solides hybrides sont difficilement utilisables par ajout direct de la poudre dans la formulation. Il faut donc les pré disperser sous forme de pâtes fluides. Les polymères, agents mouillants et dispersants du marché ne permettent pas de trouver un compromis acceptable pour ces particules solides. Il faut en effet réussir à combiner les quatre performances suivantes :
- une concentration de particules solides au moins égale à 40% en volume,
- une rhéologie permettant la manipulation de la pâte fluide au cours des différents transferts (versement, agitation dans des réservoirs, pompage, dosage, mélange avec d'autres fluides),
- une bonne stabilité au stockage (absence de décantation et de synérèse après plusieurs mois quelle que soit la température) et
- une bonne compatibilité avec les milieux chimiques de l'application finale (eau/solvant, nature chimique des constituants, liants, tensioactifs, etc.).

Dans WO 02081581 le copolymère greffé comprenant au moins trois séquences de natures chimiques distinctes, constitué de :
1/ 5 à 40 %, de préférence 15 à 35 %, de préférence encore 20 à 30 % en teneur massique de dite(s) séquence(s) d'ancrage constituée(s) par un copolymère linéaire constitué à partir d'au moins deux unités monomériques distinctes comprenant :
   - une première unité monomérique éthylénique comportant au moins un groupement azoté basique choisi de préférence parmi -NH2, -NH-, -NHR, -NR₂, - CONH₂, -CONHR, R représentant un radical alkyle en C1-C6, et les groupes hétérocycliques, de type pyridine,
   - une seconde unité monomérique éthylénique insaturée comportant un groupe aromatique, de préférence un phényle,
   la teneur massique en dites premières unités monomériques par rapport auxdites secondes unités monomériques étant de 40 à 60 %, de préférence d'environ 50 %.
2/ 25 à 90 %, de préférence 40 à 80 %, de préférence encore 50 à 70 % de teneur massique de(s)dite(s) séquence(s) hydrophobe(s) comprenant un polymère organosoluble, et
3/ de 5 à 70 %, de préférence 15 à 30 %, de préférence encore 10 à 20 % de teneur massique de(s)dite(s) séquence(s) hydrophile(s) comprenant un polymère organosoluble.

Dans WO 02081581 le copolymère greffé comprend une séquence d'ancrage comprenant :
a.1. - desdits premiers monomères avec des groupements azotés basiques introduits à partir d'un ou plusieurs composé(s) choisi(s) parmi les vinylpyridine et de préférence aminoalkyl(méth)acrylate de formule I suivante : 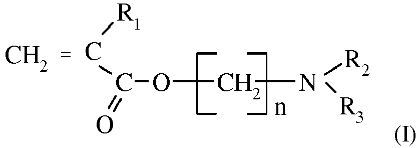 où R₁ est un atome d'hydrogène ou un radical (C1-C4) alkyle ; R₂ et R₃ identiques ou différents représentent chacun un hydrogène ou un radical (C1-C4) alkyle, n = 0 à 6, et
a.2. - Ledit second monomère de la séquence d'ancrage est constitué par un monomère de formule II suivante : 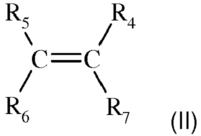 dans laquelle :
   - R₄, R₅, R₆ sont identiques ou différents et représentent chacun un hydrogène ou un radical alkyle en C1-C4, de préférence un hydrogène,
   - R₇ représente un groupe aromatique, notamment un groupe phényle éventuellement substitué, notamment par un radical alkyl en C1-C4.

Ledit premier monomère peut être notamment un méthacrylate d'aminoalkyle ou encore un vinylpyridine.

Ledit second monomère peut être notamment un styrène ou alkylstyrène tel que α et méthylstyrène ou tertiobutylstyrène.

Plus particulièrement, dans ladite séquence d'ancrage, ledit premier monomère est le monomère de méthacrylate de 2-diméthylaminoéthyle (MADAME) et ledit second monomère est le styrène.

La ou les séquence(s) à caractère hydrophobe est (ou) sont choisie(s) de telle sorte que leurs propriétés de solubilité soient complémentaires de celles de la ou des séquence(s) à caractère hydrophile mentionnée(s) ci-après, afin de conférer au copolymère bigreffé son caractère de dispersant universel vis-à-vis des solvants et des liants.

Dans WO 02081581, ladite séquence hydrophobe préférée est obtenue à partir d'un macromonomère de formule (III) suivante : 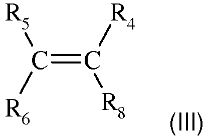 dans laquelle :
- R₄, R₅, R₆ sont identiques ou différents et représentent chacun un hydrogène ou un radical alkyle en C1-C4, de préférence un hydrogène, et
- R₈ représente COOR₁₀, avec R₁₀ qui est un alkyle en C1-C10, de préférence substitué par un radical alkyle en C4-C8.

Plus particulièrement encore, le dit macromère hydrophobe est un méthacrylate d'éthylhexyle (EHMA).

Dans WO 02081581, ladite séquence hydrophile est obtenue à partir d'un macromonomère de formule (IV) suivante : 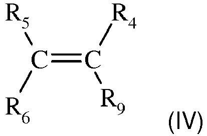
- R₄, R₅, R₆ sont identiques ou différents et représentent chacun un hydrogène ou un radical alkyle en C1-C4, de préférence un hydrogène,
- R₉ est une séquence à caractère hydrophile constituée par un polymère dont les unités monomériques à caractère hydrophile seront de préférence choisies parmi :
- l'oxyde d'éthylène,
- les acides (méth)acryliques, l'acide maléique, l'acide fumarique, l'acide itaconique,

De préférence encore, dans la formule (IV) ci-dessus, R₉ est du polyéthylène glycol et le macromonomère IV est du méthacrylate de polyéthylène glycol.

Plus particulièrement, Dans WO 02081581, on prépare les copolymères greffés selon l'invention par voie radicalaire (technique "macromonomère"), à partir de macromonomères tels les : (méth)acrylates de poly(ethyleneglycol) de préférence de masse moléculaire supérieure ou égale à 500, tel que le HEMA-10, commercialisés par Bimax Chemicals Ltd.

Les copolymères greffés spécifiques utilisés pour les formulations de concentrés pigmentaires de WO 9728200 ou pour les formulations de concentrés de charges et solide fibreux de WO 02081581 décrites ci-dessus ne permettent pas d'obtenir le compromis recherché pour les pigments hybrides selon la présente invention. Si la concentration est suffisante (supérieure ou égale à 40% en poids), soit la rhéologie n'est pas adaptée (viscosités trop élevées) pour une bonne manipulation soit la stabilité est très insuffisante (décantation et synérèse en quelques jours). Si la rhéologie et la stabilité sont acceptables, la concentration de la pâte fluide (inférieure à 25% en volume) est très insuffisante. Dans ce cas, pour ajouter la quantité nécessaire de particules actives dans la formulation, il faudrait doser une grande quantité de pâte fluide donc apporter une grande quantité de substances étrangères (eau, solvants, mouillants, dispersants, stabilisants, etc.) dans les formulations peintures, encres, revêtements liquides et matières plastiques liquides ce qui nuirait à leurs propriétés d'usage.

Le but de la présente invention est donc de fournir un concentré liquide de particules solides hybrides pigmentaires, comprenant des copolymères universels présentant les propriétés énumérées ci-dessus en milieu solvant ou aqueux, et présentant une teneur en extraits secs de pigments élevée, notamment une teneur pondérale en extrait sec de charge supérieure ou égale à 40 %, tout en étant stable et compatible avec les autres constituants des peintures, de manière à pouvoir préparer directement les peintures colorées avec ces concentrés pigmentaires.

Il est en effet avantageux de pouvoir préparer des peintures avec des modules de concentrés pigmentaires liquides, donc stockables en cuves, pompables, dosables automatiquement et aisément mélangeables pour rendre la fabrication d'une peinture rapide et économique. Cela permet de réduire les temps de fabrication des peintures, ainsi que les coûts de stockage des matières premières en nombre et en quantité, ainsi que les coûts de fabrication et de formulation des peintures. Et, ceci permet également d'augmenter la diversification des peintures, ainsi que la souplesse de production et d'automatisation de la production des peintures colorées.

Ces concentrés pigmentaires doivent être liquides pour être stockables, pompables et dosables au moyen d'équipements traditionnels disponibles dans l'industrie de la peinture. On entend ici par « liquide » un fluide dont les caractéristiques rhéologiques mesurées à 20°C sont les suivantes :
- seuil d'écoulement inférieur à 15 N/m², et
- viscosité à 500 s⁻¹, inférieure à 40 Pa.s.

Ces concentrés pigmentaires doivent être stables pour rester homogènes au cours de leur transport et stockage : on ne doit noter ni décantation ni synérèse lorsqu'ils sont tenus sans agitation temporaire. Et, on ne doit pas noter de floculation des particules solides au contact des autres constituants de la peinture au cours de l'incorporation dans la formule de peinture.

Le problème posé par la présente invention est donc de développer des copolymères spécifiques répondant à ces propriétés additionnelles permettant la préparation d'un concentré de pigments hybrides minéraux et organiques de 0.5 à 2 µm présentant les propriétés précédentes recherchées des copolymères (dispersion, stabilisation, émulsification).

Il ressort des essais effectués par les inventeurs qu'il est difficile d'obtenir un copolymère qui réponde à l'ensemble des propriétés recherchées selon les objectifs de la présente invention.

En particulier, il est vraisemblable que la nature hybride des particules interfèrent avec l'affinité chimique et absorption entre la séquence d'ancrage des polymères et lesdites particules solides en termes de liaisons hydrogène et/ou liaisons polaires.

On a découvert selon la présente invention que, les différents objectifs de la présente invention sont atteints avec un concentré pigmentaire liquide de particules hybrides minérales et organiques contenant des copolymères greffés contenant des séquences hydrophiles spécifiques contenant des séquence de poly propylène glycol, notamment ladite séquence hydrophile est obtenue à partir d'un macromonomère de formule (IV) suivante : 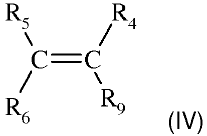
- R₄, R₅, R₆ sont identiques ou différents et représentent chacun un hydrogène ou un radical alkyle en C1-C4, de préférence un hydrogène, et
- R₉ comprend une séquence de polyéthylène glycol ou polypropylène glycol substituée telle que définie ci-après.

On entend ici par « taille de 0.5 à 2 µm » que le diamètre médian de la distribution granulométrique des dites particules est en moyenne de 0.5 à 2 µm.

Plus précisément, la présente invention a pour objet un concentré liquide de pigments de particules solides hybrides minérales et organiques de 0.5 à 2 µm, de préférence avec au moins une proportion pondérale relative de molécules organiques de colorants dans les dits pigments de particules solides hybrides de 1 à 45%, utiles pour la fabrication de peintures comprenant un solvant aqueux ou organique, comprenant un copolymère greffé comprenant au moins trois séquences de natures chimiques distinctes, parmi lesquelles au moins une séquence d'ancrage apte à s'absorber sur des particules solides, au moins une séquence à caractère hydrophobe et au moins une séquence à caractère hydrophile, caractérisé en ce qu'il comprend undit copolymère constitué de :
1/ 5 à 40 %, de préférence 15 à 35 %, de préférence encore 20 à 30 % en teneur massique de dite(s) séquence(s) d'ancrage constituée(s) par un copolymère linéaire constitué à partir d'au moins deux unités monomériques distinctes comprenant :
   a/ un premier monomère avec au moins un groupement azoté basique introduits à partir d'un ou plusieurs composé(s) choisi(s) parmi les vinylpyridine et de préférence aminoalkyl(méth)acrylate de formule I suivante : 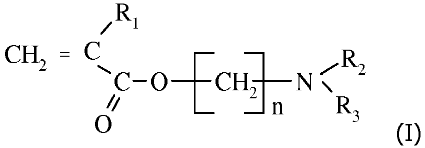 où R₁ est un atome d'hydrogène ou un radical (C1-C4) alkyle ; R₂ et R₃ identiques ou différents représentent chacun un hydrogène ou un radical (C1-C4) alkyle, n = 0 à 6, et
   b/ un second monomère de la séquence d'ancrage est constitué par un monomère de formule II suivante: 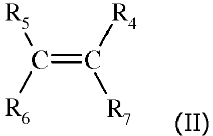 dans laquelle :
      - R₄, R₅, R₆ sont identiques ou différents et représentent chacun un hydrogène ou un radical alkyle en C1-C4, de préférence un hydrogène,
      - R₇ représente un groupe aromatique comprenant un groupement phényle éventuellement substitué,
      - la teneur massique en dit premier monomère par rapport audit second monomère étant de 40 à 60 %, de préférence d'environ 50 %, et
2/ 25 à 90 %, de préférence 40 à 80 %, de préférence encore 50 à 70 % de teneur massique de dite(s) séquence(s) hydrophobe(s) obtenues à partir d'un macromonomère de formule (III) suivante : 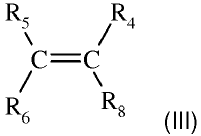 dans laquelle :
   - R₄, R₅, R₆ sont identiques ou différents et représentent chacun un hydrogène ou un radical alkyle en C1-C4, et
   - R₈ est constituée par un polymère dont les unités monomériques comportent des groupements - COOR₁₀ dans lequel R₁₀ est un alkyle en C1-C10 éventuellement substitué, de préférence un alkyle en C2-C8 éventuellement substitué par un hydroxyl, et
3/ de 5 à 70 %, de préférence 15 à 30 %, de préférence encore 10 à 20 % de teneur(s) massique(s) séquence(s) hydrophile(s) obtenues à partir d'un macromonomère de formule (IV) suivante : 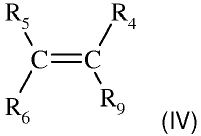
   - R₄, R₅, R₆ sont identiques ou différents et représentent chacun un hydrogène ou un radical alkyle en C1-C4, et
   - R₉ est une séquence à caractère hydrophile comprenant une séquence de polyéthylène glycol (a) substituée par un groupe alkoxy terminal ou (b) reliée à une séquence polypropylène glycol.

Dans un premier mode de réalisation, lesdites particules solides hybrides comprennent des particules minérales à structure creuse ou poreuse, remplies de pigments colorants organiques, de préférence avec au moins une proportion pondérale relative de pigments organiques colorants dans les dits pigments de particules solides hybrides de 1 à 30%.

Plus particulièrement, lesdites particules hybrides comprennent des particules minérales d'argile sous forme de fibres creuses dénommée sépiolite à l'intérieur desquelles fibres des pigments organiques colorantes d'origine végétale sont introduites.

Dans un second mode de réalisation, lesdites particules hybrides comprennent des particules de complexes de pigments réfléchissants les rayonnements infra rouge (IR) complexés à des molécules organiques de colorants de préférence avec au moins une proportion pondérale relative de molécules organiques colorants dans les dits pigments de particules solides hybrides de 1,5 à 15%.

Plus particulièrement, lesdites particules de complexes de pigments réfléchissants les rayonnements infra rouge (IR) comprennent des oxydes métalliques blancs de préférence le dioxyde de titane de forme cristalline rutile, ou des oxydes métalliques noirs de préférence l'oxyde de chrome.

Plus particulièrement, dans la séquence hydrophile du copolymère selon l'invention, est obtenue à partir d'un macromonomère de méthacrylate de poly propylène glycol-éthylène glycol R₉ étant une séquence de polypropylène glycol substituée par une séquence terminale de polyéthylène glycol de préférence de masse moléculaire supérieure ou égale à 500.

Plus particulièrement encore, ladite séquence hydrophile du copolymère selon l'invention est obtenue à partir d'un macromonomère de méthacrylate de méthoxypoly ethylène glycol, R₉ étant une séquence à caractère hydrophile comprenant une séquence de polyéthylène glycol substituée par un groupe méthoxy terminal, de préférence de masse moléculaire supérieure ou égale à 500.

Plus particulièrement encore, dans ladite séquence d'ancrage du copolymère selon l'invention, ledit premier monomère est le monomère de méthacrylate de 2-diméthylaminoéthyle et ledit second monomère est le styrène.

Plus particulièrement, ladite séquence hydrophobe du copolymère selon l'invention est obtenue de manière originale à partir d'un macromonomère de formule (III) qui est un polymère d'unités de méthacrylate d'éthylhéxyle (EHMA).

Plus particulièrement encore, la masse moléculaire du copolymère greffé selon l'invention est comprise entre 5000 et 25000, de préférence entre 10000 et 20000.

Plus particulièrement encore, le dit copolymère selon l'invention comprend :
- une dite séquence hydrophile obtenue à partir d'un macromonomère.de méthacrylate de polypropylène glycol-éthylène glycol, ou un méthacrylate de méthoxy polyéthylène glycol.
- une dite séquence d'ancrage obtenu avec un dit premier monomère qui est le monomère de méthacrylate de 2-diméthylaminoéthyle et ledit second monomère qui est le styrène ; et
- une dite séquence hydrophobe obtenue à partir d'un macromonomère de polymère de méthacrylate d'éthylhéxyle (EHMA).

Plus particulièrement encore, le concentré liquide de pigments de particules solides hybrides selon l'invention comprend un solvant aqueux.

Plus particulièrement encore, le concentré liquide de pigments de particules solides hybrides selon l'invention comprend un extrait sec de pigments de particules solides hybrides supérieur ou égal à 45%.

Plus particulièrement encore, le concentré liquide de pigments de particules solides hybrides selon l'invention comprend une teneur pondérale de l'extrait sec desdits copolymères greffés est de 10 à 30% du poids dudit concentré liquide.

Les séquences du copolymère de l'invention telles que définies ci-dessus permettent d'obtenir des concentrés liquides de pigments de particules solides hybrides à extraits secs élevés (au moins 40 voire 45 %) tout en étant stables et compatibles avec les autres constituants des peintures, aussi bien en milieu solvant qu'un milieu aqueux, et ce pour les différentes charges de pigments de particules solides hybrides.

Les raisons pour lesquelles ces copolymères tels que définis selon la présente invention, sont particulièrement adaptés dans l'application recherchée selon la présente invention, ne sont pas totalement élucidées par les inventeurs.

La synthèse de ces copolymères greffés est basée sur l'utilisation de la technique "macromonomère" et/ou le greffage de télomères fonctionnalisés sur une chaîne linéaire ou greffée préformée. Ainsi ils peuvent être préparés par copolymérisation radicalaire d'un ou plusieurs macromonomère(s) hydrophile(s) et d'un ou plusieurs macromonomère(s) hydrophobe(s) avec un ou plusieurs comonomère(s) azoté(s).

Ces synthèses sont réalisées sous atmosphère inerte en présence d'un solvant ou d'un mélange de solvants approprié, c'est-à-dire dans lesquels les réactifs, macromonomères, comonomères soient totalement solubles et les produits finaux soient totalement ou au moins partiellement solubles. Ces solvants seront notamment choisis parmi des hydrocarbures aromatiques tels que le toluène ou le xylène ; des éthers tels que la dioxane ou le tétrahydrofuranne; des cétones telles que l'acétone ou la méthyléthylcétone; des esters tels que l'acétate d'éthyle ou l'acétate de butyle. On utilisera de préférence la dioxane ou le tétrahydrofurane lors de la préparation des copolymères greffés.

La synthèse débute par la préparation des macromonomères, par télomérisation puis fixation d'une double liaison en bout de chaîne, étape suivie de la copolymérisation desdits macromonomères avec les comonomères.

On peut également préparer les copolymères greffés selon l'invention en fixant une ou plusieurs molécule(s) fonctionnalisée(s), l'un des deux types de greffons hydrophile ou hydrophobe, voire les deux types de greffons, sur un polymère préformé à l'aide de monomères réactifs, cette chaîne pouvant déjà contenir un ou plusieurs greffon(s) hydrophile(s) ou hydrophobe(s) incorporés par voie radicalaire. Dans ce cas le déroulement de la réaction impose l'utilisation d'au moins deux réacteurs distincts, le premier servant à la préparation de la chaîne principale, le second destiné à la préparation du télomère.

Le greffage de ces chaînes latérales sur le polymère préformé peut alors être réalisé en ajoutant le contenu du ou des réacteurs contenant les télomères au premier.

Les copolymères greffés selon l'invention possèdent, répartis le long de leur séquence d'ancrage des unités monomériques comprenant des groupements azotés basiques, disposés de manière statistique.

Lesdits groupements basiques peuvent être définis par leur pKa, compris entre 2 et 14, de préférence entre 5 et 14, en particulier entre 5 et 12. Les mesures de pKa sont effectuées à 25 °C dans l'eau à une concentration de 0,01 molaire.

La ou les séquence(s) à caractère hydrophobe est (ou) sont choisie(s) de telle sorte que leurs propriétés de solubilité soient complémentaires de celles de la ou des séquence(s) à caractère hydrophile mentionnée(s) ci-après, afin de conférer au copolymère bigreffé son caractère de dispersant universel vis-à-vis des solvants et des liants.

Les polymères organosolubles formés d'unités monomères dont le paramètre de solubilité inférieur ou égal à 21,5 J^{1/2}/cm^{3/2}, de préférence inférieur à 19 J^{1/2}/cm^{3/2}, constituent lesdites séquences à caractère hydrophobe et permettent de disperser les particules en milieu apolaire.

L'incorporation de ce(s) séquence(s) ou greffon(s) dans le copolymère peut être effectuée en copolymérisant par voie radicalaire un ou plusieurs macromonomère(s) organosoluble(s) avec un ou plusieurs comonomère(s) éthylénique(s) insaturé(s) mentionné(s) plus haut dans la description de la séquence d'ancrage, à savoir un ou plusieurs monomère(s) éthylénique(s) azoté(s), optionnellement un ou plusieurs monomère(s) éthylénique(s) insaturé(s) neutre(s) et au moins un macromonomère à caractère hydrophile décrit ci-dessous (à partir des amorceurs habituellement utilisés, par exemple les peroxydes organiques, les systèmes redox, ou de préférence les composés azoïques), et conduira à la formation d'un copolymère bigreffé.

Ces greffons à caractère hydrophobe peuvent également être fixés par copolymérisation radicalaire ou par greffage sur un copolymère linéaire ou ramifié constitué d'un ou plusieurs monomère(s) éthylénique(s) azoté(s) ou insaturé(s) cité(s) plus haut dans la description de la séquence d'ancrage, et/ou un ou plusieurs macromonomère(s) à caractère hydrophile décrits ci-dessous.

De préférence, lesdites séquences hydrophobes selon l'invention présentent une hydrophobicité telle que le paramètre de solubilité des monomères de la séquence hydrophobe est inférieur à 22,5 J^{1/2}/cm^{3/2}.

Les paramètres de solubilité exprimés en J^{1/2}/cm^{3/2}, ont été calculés par la méthode d'incrémentation d'Hoftyzer-Van Krevelen ou mesurés expérimentalement (cas du polydiméthylsiloxane). Les volumes molaires nécessaires lors du calcul des paramètres de solubilité sont calculés à partir des données de Feedor. Ces méthodes de calcul et valeurs expérimentales sont exposées dans l'ouvrage : D.W. VAN KREVELEN, "Properties of polymers. Their correlation with chemical structure ; their numerical estimation and prediction from additive group contributions", Third édition, Elsevier, 1990, p. 189-225.

La ou les séquence(s) à caractère hydrophile, répartie(s) de manière statistique le long de la chaîne principale du copolymère, sont à l'origine de la solubilité des copolymères dans l'eau. Ce sont ces séquences qui stabilisent les dispersions de particules en milieu aqueux. Le paramètre de solubilité des unités monomères constituant ces greffons hydrophiles est supérieur ou égal à 22 J^{1/2}/cm^{3/2}, de préférence supérieur à 22,5 J^{1/2}/cm^{3/2}.

L'introduction de ces chaînes latérales dans le copolymère peut être réalisée en utilisant un ou plusieurs macromonomère(s) à caractère hydrophile. Un macromonomère de ce type se compose d'un polymère hydrosoluble.

La copolymérisation d'un ou plusieurs de ces macromonomère(s) hydrophiles avec un ou plusieurs comonomère(s) éthylénique(s) insaturé(s) mentionné(s) plus haut dans la description de la séquence d'ancrage, à savoir un ou plusieurs composé(s) a) un ou plusieurs monomère(s) éthylénique(s) insaturé(s) neutre(s), et au moins un macromonomère à caractère hydrophobe décrit ci-dessus (à partir des amorceurs habituellement utilisés, par exemple les peroxydes organiques, les systèmes redox, ou de préférence les composés azoïques) conduira à la formation d'un copolymère bigreffé selon l'invention.

Ces greffons à caractère hydrophile peuvent également être fixés par copolymérisation radicalaire ou greffage sur un copolymère linéaire ou ramifié constitué d'un ou plusieurs monomère(s) éthylénique(s) azoté(s) ou insaturé(s) cité(s) plus haut dans la description de la séquence d'ancrage.

Comme mentionné précédemment, dans un copolymère greffé selon l'invention, la séquence hydrophile est de nature chimique distincte de ladite séquence hydrophobe, ainsi que de ladite séquence d'ancrage d'une part, et d'autre part, l'hydrophilie de la séquence hydrophile est supérieure à celle desdites séquences hydrophobe et d'ancrage.

De préférence, lesdites séquences hydrophiles présentent une hydrophilie telle que le paramètre de solubilité des monomères de la séquence hydrophile est supérieur à 22,5 J^{1/2}/ cm^{3/2}, de préférence encore supérieur à 24 J^{1/2}/ cm^{3/2}.

Avantageusement, la masse moléculaire du copolymère greffé est comprise entre 5000 et 25000, de préférence entre 10000 et 20000.

Lesdits copolymères peuvent être préparés par copolymérisation radicalaire à partir de macromonomères et/ou par greffage de polymères fonctionnalisés sur une chaîne préformée, et présentent de ce fait une structure bien contrôlée.

Ce mode de synthèse offre en outre la possibilité d'ajuster la masse moléculaire de la séquence d'ancrage, afin d'augmenter le taux d'adsorption des copolymères sur les particules, aussi bien minérales qu'organiques, ainsi que celle des chaînes latérales, en améliorant leur compatibilité avec la phase continue.

Ainsi, en utilisant les copolymères greffés selon l'invention pour la préparation de concentrés pigmentaires, on atteint un état de dispersion supérieur à celui obtenu à partir des dispersants de l'art antérieur. De plus la masse moléculaire élevée des produits selon l'invention permet de préparer des concentrés pigmentaires sans résine d'allongement.

La copolymérisation radicalaire est effectuée de préférence à une température comprise entre 50 °C et 140 °C, et la réaction de greffage à une température de préférence comprise entre 20 °C et 150 °C.

Avantageusement, l'ordre d'addition des monomères lors de la copolymérisation radicalaire est le suivant :
- les macromonomères, de masse moléculaire élevée et de ce fait moins réactifs, sont incorporés dès le départ dans le réacteur, avec le solvant;
- le ou les comonomères constituant la chaîne principale, plus réactifs, sont introduits en continu au cours du temps, de manière à ce que leur concentration soit toujours faible par rapport à celle des macromonomères.

Selon une première variante un procédé de préparation d'un copolymère greffé tel que défini ci-dessus comprenant au moins trois séquences de nature chimique distincte, parmi lesquelles une séquence d'ancrage sur les particules solides , une ou plusieurs séquence(s) à caractère hydrophobe et une ou plusieurs séquence(s) à caractère hydrophile, dans lequel la chaîne principale est une séquence d'ancrage sur les particules solides, caractérisé en ce que l'on effectue la copolymérisation radicalaire de :
i) desdits premiers monomère(s) comportant au moins un groupement azoté basique, notamment des monomères de formule I ci-dessus, et desdits seconds monomères comportant un groupe aromatique, notamment des monomères de formule II ci-dessus
ii) des macromonomères hydrophobes représentés par la formule III : 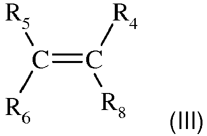 où R₄, R₅, R₆, et R₈ ont des significations données ci-dessus.
iii) desdits macromonomères hydrophiles représentés par la formule IV : 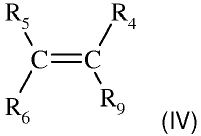 où R4, R5, R6 et R9 sont tels que définis ci-dessus.

L'invention concerne également ledit copolymère sous forme d'un de ses sels, obtenu par quaternisation ou neutralisation des fonctions basiques.

On rappelle ici qu'on entend ici par « concentré liquide » un fluide dont les caractéristiques rhéologiques mesurées à 20°C sont les suivantes :
- seuil d'écoulement inférieur à 15 N/m², et
- viscosité à 500 s⁻¹ inférieure à 40 Pa.s.

La formulation de concentré selon l'invention permet de réduire :
- les temps de fabrication des peintures à quelques minutes,
- le coût de possession des stocks de matières premières (nombre et quantité), et
- les coûts de fabrication et de formulation des peintures et d'augmenter la diversification des peintures et la créativité (nouvelles peintures), ainsi que la souplesse de production et enfin d'automatiser la production des peintures.

La présente invention a également pour objet un procédé de préparation de peinture à l'aide d'un concentré liquide selon l'invention, que l'on mélange avec les autres constituants de la peinture, tels que des colorants, des liants en milieu organique ou aqueux, et d'autres additifs notamment des agents de séchage ou des agents bactéricides, des agents anti-mousse comme explicité à l'exemple 3..

D'autres caractéristiques et avantages de la présente invention appariation à la lumière des exemples détaillés de réalisation qui vont suivre.

### Exemple 1 : Préparation de copolymères

### A) Les copolymères

Les copolymères sont de structure « peigne » dont la chaine principale est la séquence d'ancrage sur les particules solides et les chaines latérales sont constituées de séquences hydrophobes et hydrophiles. selon la nature des particules sur lesquelles le copolymère se fixera, les séquences hydrophile et/ou hydrophobes peuvent alternativement aussi être des séquences d'ancrage.

La séquence d'ancrage : est composée de monomères acryliques aminés (par exemple le MADAME) ou non aminé (acide méthacrylique) et/ou vinyliques aromatiques (par exemple le styrène ou la 2-vinylpyridine).

La séquence hydrophobe est obtenu à partir du macromère de polymère de d'éthylhéxyl méthacrylate de masse molaire 1000 à 3000, indice de polydispersité 1,3 à 1,5, de structure :CH₃-(CH₂)₃-CH(C₂H₅)-CH₂-O-CO-C(CH₃)=CH₂.

Les séquences hydrophiles sont obtenues à partir des macromères HEMA 10, PPGEGMA 750, PPGMA, CLA et MPEGMA.
3a) PPGEGMA 750 - Poly-propylèneglycol-éthylèneglycol-métacrylate Structure : 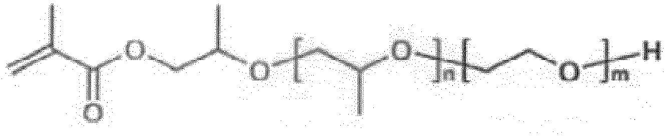
   Le PPGEGMA est l'ester de l'acide méthacrylique estérifié avec n unités de propylène glycol et m unités d'éthylène glycol.
   Le PPGEGMA 750 de masse molaire moyenne en poids est d'environ 750 g/mole correspond à n= 2 à 4 unités de propylène glycol et m= 8 à 10 unités d'éthylène glycol.
3b) PPGMA - Poly-propylèneglycol-métacrylate
   Structure : 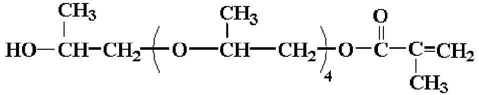
   Le PPGMA est le mono méthacrylate avec n unités de polypropylène glycol, notamment n=5 pour une masse molaire moyenne en poids est d'environ 376 g/mole.
3c) CLA - Acrylate de caprolactone
   Structure : 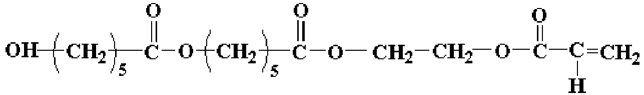
   Le CLA est l'acrylate de caprolactone. Sa masse molaire moyenne en poids est d'environ 344 g/mole.
3d) MPEGMA - Méthoxy Polyéthylène glycol mono méthacrylate
   Structure : 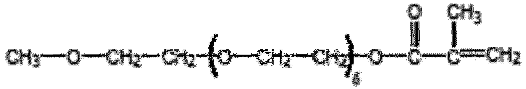
   Le MPEGMA 550 est le mono méthacrylate avec n=6 unités d'éthylène glycol.Sa masse molaire moyenne en poids est d'environ 550 g/mole.
3e) HEMA 10 = Méthacrylate de Polyéthylène glycol (ou hydroxy poly éthoxy (10) méthacrylate).Structure : OH-(-CH₂-CH₂-O)ₙ-CO-C(CH₃)-CH₂ avec n=10.

Sa masse molaire moyenne en poids pour n=10 est d'environ 600 g/mole.

Dans le tableau 1 les indications fournies correspondent aux proportions pondérales relatives des différents composants.

**Tableau 1**

| Copolymères | Composition | 1 | 2 | 3 | 4 | 5 | 6 | 7 | 8 | 9 | 10 | 11 |
|---|---|---|---|---|---|---|---|---|---|---|---|---|
| Séquence d'ancrage | Acide méthacrylique | | | 20 | 20 | | | | | | 20 | |
| | Styrène | 20 | 20 | 20 | | 20 | 20 | 20 | 20 | 20 | | |
| | MADAME(1) | 20 | 20 | | 20 | 20 | 20 | 20 | 20 | 20 | | 20 |
| | 2-vinylpyridine | | | | | | | | | | 20 | 20 |
| Séquence hydrophobe | Macromère pEHMA 2000(2) | 100 | | 100 | 100 | 100 | 100 | 100 | 100 | | 100 | 100 |
| | Macromère pEHMA 2700(3) | | 100 | | | | | | | 100 | | |
| Séquence hydrophile | Macromère HEMA-10 | 22 | 22 | 22 | 22 | | | | | | | |
| | Macromère PPGEGMA 750 | | | | | 22 | | | | | | |
| | Macromère PPGMA | | | | | | 22 | | | | | |
| | Macromère CLA | | | | | | | 22 | | | | |
| | Macromère MPEGMA 550 | | | | | | | | 22 | 22 | 22 | 22 |
| Caractéristiques du polymère | Masse molaire | 14500 | 19200 | 12000 | 11000 | 15000 | 17300 | 18700 | 14000 | 155 00 | 11800 | 15500 |
| | Indice de polydispersité | 1.60 | 1.72 | 1.43 | 1.51 | 1.78 | 1.83 | 1.52 | 1.55 | 1.64 | 1.57 | 1.64 |

| | | | | | | | | | | | | |
|---|---|---|---|---|---|---|---|---|---|---|---|---|
| (1) MADAME : méthacrylate de 2-diméthylaminoéthyl (2) Masse molaire : 2000, Indice de polydispersité 1,26 (3) Masse molaire : 2700, Indice de polydispersité 1,45 | | | | | | | | | | | | |

### B) Protocole :

On ajoute les différents composants ci-après dans une cuve, en semi-batch, de manière à éviter une dérive de la composition, due à une réactivité différente des divers réactifs. La copolymérisation s'effectue à 80°C.

Les conditions opératoires sont décrites ci-après :*
En fin d'addition, le réacteur est laissé à 80°C pendant environ 5 heures pour obtenir une conversion totale.

La solution obtenue, une fois refroidie, présente un aspect clair sans formation de gel.

Le changement de phase du copolymère obtenu se fait par ajout de celui-ci dans la phase aqueuse et l'échange se fait par distillation azéotropique.

La suspension finale de copolymère en phase aqueuse est translucide après refroidissement.

**Composition copolymère ajoutée dans la cuve :**

| | |
|---|---|
| Macromère hydrophobe | : 438 g |
| Macromère hydrophyle | : 237 g |
| Styrène | : 54 g |
| MADAME | : 54 g |
| Toluène | : 748 g |
| AMBN | : 17,3 g |
| AMBN | : 17,3 g |

Les copolymères n° 1, 2, 5, 6, 7, 8, 9, 10 et 11 comprennent des séquences d'ancrage selon l'invention. Au vu des résultats comparatifs de l'exemple 3 ci-après, les copolymères n° 1, 2, 5, 6, 7, 8 et 9 comprennent une séquence d'ancrage préférée.

Parmi ceux-ci, les copolymères n° 1, 5, 6, 7 et 8 comprennent une séquence hydrophobe préférée selon l'invention (EHMA 2000), et les copolymères n° 5, 8, 9 et 10 une séquence hydrophile préférée selon l'invention (PPGEGMA 750 et MPEGMA 550).

D'autres séquences d'ancrage comprenant un seul des deux éléments ont été testés mais présentaient des résultats insatisfaisants en combinaison avec les meilleurs séquences hydrophiles et séquences hydrophobes d'une part et d'autre part, d'autres séquences hydrophobes notamment le macromère PLMA ont été testées avec les meilleures séquences d'ancrage et séquences hydrophiles ont été testées présentant des résultats moins bons notamment des PPGMA et CLA de plus grands poids moléculaires.

### Exemple 2 : Préparation de concentrés pigmentaires

### A) Protocole opératoire :

On prépare des concentrés liquides aqueux de particules de diamètre intermédiaire par mélange des constituants suivants :
- Eau
- Copolymère
- Particules de diamètre intermédiaire
- Additifs : antimousse, bactéricides, agents de rhéologie

Le mode opératoire de fabrication des concentrés de particules de diamètre intermédiaire est le suivant :
1-Introduction de l'eau dans une cuve
2-Ajout de la quantité de copolymère
3-Mise en place de la cuve sous un agitateur de vitesse variable avec un disque de dispersion adapté par rapport à la taille de la cuve
4-Introduction progressive des particules de diamètre intermédiaire sous agitation modérée (500 à 800 t/mn).

Cette première phase se définit comme la phase d'empâtage qui permet de mouiller la surface des particules de diamètre intermédiaire ; les particules de diamètre intermédiaire ne sont pas encore dans leur état de dispersion maximale (séparation complète des particules formant des agglomérats de particules de diamètre intermédiaire); un temps d'empâtage d'environ 20 minutes à 40 minutes selon les caractéristiques des particules de diamètre intermédiaire. Une partie des additifs est également ajoutée durant cette phase d'empâtage.
5-L'opération de « broyage » est réalisée en augmentant la vitesse de dispersion vers 1500 t/mn avec une vitesse périphérique importante autour de 15 à 20 m/seconde. Dans cette étape de broyage, il ne s'agit pas de broyer les particules élémentaires des particules de diamètre intermédiaire mais de disperser ces particules contenues dans les agglomérats. Le temps de broyage peut varier de 20 minutes à 60 minutes selon la nature des particules de diamètre intermédiaire, surtout de leur granulométrie et de leur surface spécifique. La deuxième partie d'additifs peut être ajoutée en fin de broyage.
6-Les contrôles des caractéristiques du concentré de particules de diamètre intermédiaire sont effectués en mesurant :
   - Extrait sec
   - Caractéristiques rhéologiques
   - Stabilité
   - Compatibilité

On a également préparé avec succès des concentrés en phase solvant avec du White spirit comme solvant.

Les caractéristiques des particules de diamètre intermédiaire utilisées dans les exemples sont explicitées ci-après et dans le tableau 2 ci-après.

Dans le tableau 2 ci-après les particules suivantes ont été mises en œuvre :
a- Particules N° 1 à 3 : Pigments hybrides de type « mayas » bleu (N°1), rouge (N°2) et jaune (N°3)
   Ces particules sont commercialisées par .la société PIGM'AZUR (France) sous la marque est PIGM'ART.. Ils sont constitués d'une fines petites fibres creuses d'argile telle que la Sépiolite à l'intérieur de laquelle des molécules organiques ou minérales colorées d'origine végétales sont introduites, à savoir notamment les molécules colorantes choisies parmi les indigoïdes, colorants anthraquinoniques, flavonoïdes, azoïdes, mélanines, colorants tétrapyrolliques, colorants nitrés, colorants nitrosés, colorants polyméthyniques, colorants de di ou tri phénylméthane. La matière colorante est donc protégée de l'extérieur par les parois de l'argile.
   On a utilisé ci-après les pigments suivants :
   - PIGM'ART BLEU à base de bleu indigo,
   - PIGM'ART ROUGE à base de dérivés hydroxyles de l'anthraquinone, et
   - PIGM'ART JAUNE à base de dérivés de flavonoïdes.

   Les dimensions des fines particules de petites fibres creuses sont:
   - longueur moyenne de 1 µm à 2 µm,
   - diamètre des fibres (largeur) d'environ 0.01 µm;
   - diamètre interne et longueur des orifices axiaux tubulaires internes: de 3.6 Å x 10.6 Å.
b- Particules N° 4 et 5 : pigments réfléchissant les IR solaires complexés à des pigments organiques colorés.

Les particules n°4 comprennent des pigments blancs réfléchissant les IR solaires sont à base de TiO2 dioxyde de titane de forme rutile de grandes taille ALTIRIS® 800 de 800nm. Les particules n°5 comprennent des pigments noirs réfléchissant les IR solaires sont à base d'oxyde de chrome ALTIRIS® 550 pigment de 550nm.

Particules n° 4 = ALTIRIS® 800 compléxé à un pigment organique bleu de phtalacyanine. Particules n° 5 = ALTIRIS® 550 complexé à des pigments organiques rouge de Toluydine.

**Tableau 2 - Type de particules de diamètre intermédiaire**

| Type de particules | granulométrie | N° |
|---|---|---|
| Pigment hybrides de type « mayas » bleu | 1µ-2µ | 1 |
| Pigment hybrides de type « mayas » rouge | 1µ-2µ | 2 |
| Pigment hybrides de type « mayas » jaune | 1µ-2µ | 3 |
| Pigment réfléchissant les IR solaires ALTARIS 800 nm + pigment organique bleu | 700nm-900nm | 4 |
| Pigments réfléchissant les IR solaires ALTARIS 550 nm+pigment organique rouge | 500nm-600nm | 5 |

On a réuni dans le tableau 3 ci-après les exemples de concentrés de particules de diamètre intermédiaire, avec des copolymères n° 1 à 11 de l'exemple 1.

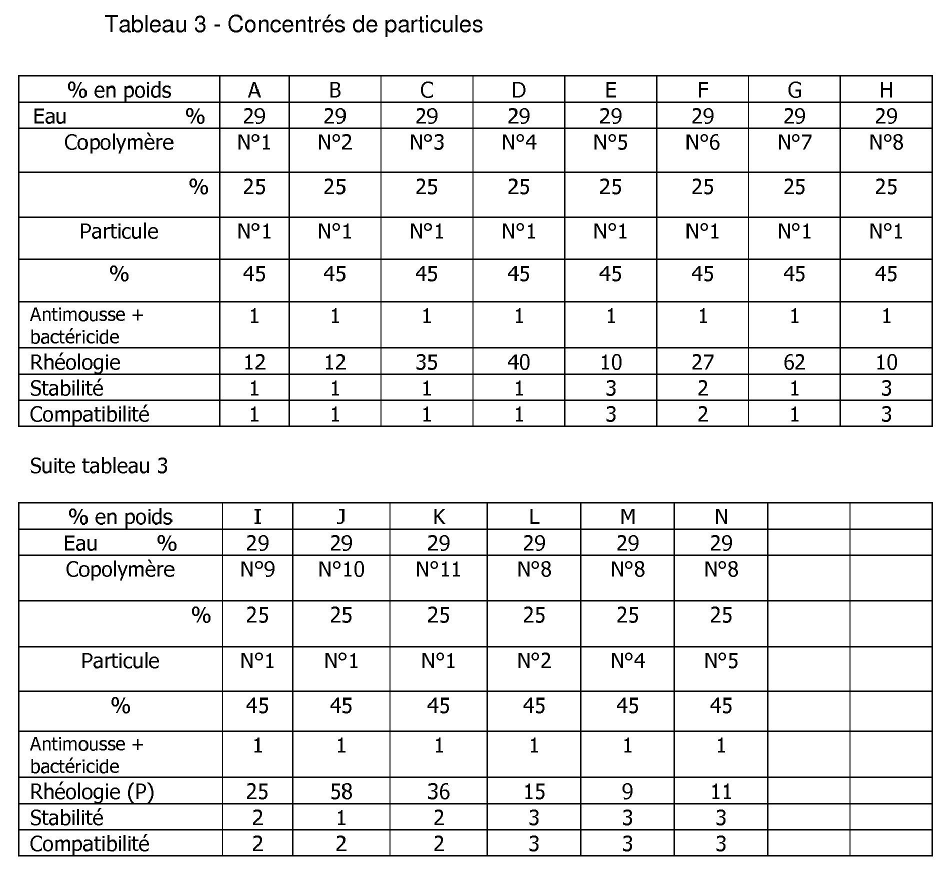

-Rhéologie : Elle est mesurée à l'aide d'un rhéomètre à 500 s⁻¹, à 20°C et exprimé en poises (P). Elle est bonne entre 8 et 15 P.

### -Test de stabilité :

### Echelle utilisée dans les tableaux :

3- bonne
2- satisfaisante
1- faible

Le test de stabilité est réalisé sur les concentrés de particules de diamètre intermédiaire mais également sur les peintures en contenant.

Ce test s'effectue sur un échantillon de concentré de particules de diamètre intermédiaire qui est placé pendant 3 semaines dans une étuve à 50 °C. 3 boites de 200 ml sont préparées et contrôlées avant l'introduction dans l'étuve.

A la fin de chaque semaine, on sort une boite de l'étuve et après une nuit d'attente pour stabiliser sa température (à la température ambiante) les contrôles suivants sont exécutés pour analyser si la stabilité est bonne ou non :
- Vérification du concentré de particules de diamètre intermédiaire dans la boite : présence ou non d'une remonté à la surface (synérèse) ou d'une décantation (présence d'un dépôt au fond de la boite, dépôt dur, mou, important ou pas).
- Mesure de la viscosité et comparaison par rapport au contrôle avant étuvage : analyse pour vérifier si le produit s'est fluidifié, ou a épaissi, ou a durci.

Ces observations et mesures sont réalisées après 1, 2 et 3 semaines ; en fonction des différentes analyses le concentré de particules de diamètre intermédiaire est classé sur l'échelle ci-dessus.

### -Test de compatibilité :

Echelle utilisée dans les tableaux : 3 = bon, 2 = satisfaisant, et 1= faible

Le test de compatibilité doit permettre de vérifier le comportement physicochimique du concentré de particules de diamètre intermédiaire dans des peintures, des revêtements liquides, des encres liquides et des formulations liquides pour l'enduction.

Après mélange avec un mélangeur à disque, à vitesse d'environ 600 t/minute, le mélange est analysé :
- Observation du mélange : présence d'agglomérats, séparation de phase, sédimentation, etc.
- Mesure de viscosités,
- Application avec un applicateur calibré de 100µ sur un support couramment utilisé en peinture, encre, enduction, une carte contraste, pour vérifier en humide la transparence du film déposé puis à sec après séchage,
- Vérification des caractéristiques du film sec : opacité, couleur, brillant.

En fonction de cette analyse, le concentré de particules de diamètre intermédiaire est classé, selon l'échelle ci-dessus, plus ou moins compatible.

De ces résultats, il ressort que l'on peut obtenir un concentré de particules de diamètre intermédiaire présentant une bonne rhéologie et des propriétés de compatibilité et de stabilité bonnes ou satisfaisantes uniquement pour les copolymères comprenant deux types de monomères dans la séquence d'ancrage, conformément à la présente invention, à savoir les copolymères 5, 6 et 8 à 11.

Par ailleurs, les copolymères à séquence hydrophobe obtenue avec des macromères (EHMA) et des séquences hydrophiles obtenues avec des macromères PPGEGMA 750 et MPEGMA 550 présentent les meilleures stabilités et compatibilité (copolymères 5 et 8)

### Exemple 3 : Préparation de peintures contenant un concentré de particules selon l'invention.

A) on prépare une peinture aqueuse en ajoutant et mélangeant chaque concentré de particules de diamètre intermédiaire dans une base de peinture pastel (P) ou transparent (TR) selon l'utilisation, à l'aide d'un agitateur gyroscopique. Les contrôles des caractéristiques des peintures sont effectués en mesurant les paramètres suivants pour la peinture liquide : densité, teneur pondérale de l'extrait sec, viscosité et stabilité. Les résultats sont classés : 3 = bon ; 2 = satisfaisant et 1 = faible dans le tableau 4.

**Tableau 4 - Peintures contenant un concentré de particules**

| | | | | | | | | | |
|---|---|---|---|---|---|---|---|---|---|
| Peinture N° | | | 1 | | | 2 | 3 | 4 | 5 |
| Base P % | 95 | 95 | 95 | 95 | 95 | 95 | 95 | 95 | 95 |
| Base TR% | | | | | | | | | |
| Concentré de particules | A | B | E | F | G | H | L | M | N |
| % | 5 | 5 | 5 | 5 | 5 | 5 | 5 | 5 | 5 |
| Résultats | 1 | 1 | 2 | 1 | 1 | 3 | 1 | 3 | 3 |

Les meilleurs résultats sont obtenus avec les concentrés contenant le copolymère n°8.
Les compositions de la base P (pastel) et de la base TR (transparent) sont explicitées dans le tableau 5 ci-après dans lequel les valeurs sont les proportions pondérales en pourcentage.

| Tableau 5 | | | | |
|---|---|---|---|---|
| BASE PASTEL | | | BASE TRANSPARENTE | |
| 5,500 | EAU | | 5,500 | EAU |
| 38,900 | CARBONATE FIN | | 38,900 | CARBONATE FIN |
| 30,000 | UCAR LATEX DL | | 30,000 | UCAR LATEX DL |
| 0,800 | COAPUR W | | 0,800 | COAPUR W |
| 22,000 | MOWILITH LDM | | 22,000 | MOWILITH LDM |
| 0,400 | ACRYSOL DR | | 0,400 | ACRYSOL DR |
| 0,150 | PREVENTOL | | 0,150 | PREVENTOL |
| 0,200 | DEA | | 0,200 | DEA |
| 1,700 | NEXCOA.NX | | 1,700 | NEXCOA.NX |
| 0,100 | CALGON N | | 0,100 | CALGON N |
| 0,250 | BYK 023 | | 0,250 | BYK 023 |

B) On prépare deux autres types de peintures avec des concentrés aqueux et respectivement de solvant organiques .

| Peinture aqueuse | Peinture solvant |
|---|---|
| • Eau | • Solvants aliphatiques, aromatiques, isoparaffiniques |
| • Liant aqueux : latex vinylique et/ou acrylique | • Liants solvant : alkydes, glycerophtaliques |
| • Modules de charges aqueux | • Modules de charges solvant ou universels |
| • Additifs : bactéricides, anti mousse, agent de rhéologie | • Additifs : agent de rhéologie, agent de séchage et plastifiant |
| • Colorants | • Colorants |

Les constituants modulaires sont tous liquides donc stockables en cuves, pompables, dosables automatiquement et aisément mélangeables.

La fabrication d'une peinture peut donc être rapide et économique.

Le mode opératoire de fabrication des peintures modulaires qui peut s'appliquer à toutes les combinaisons massiques ou volumiques entre les différents constituants liquides comprend les étapes successives suivantes :
1 - introduction des différents constituants dans une cuve
2 - mise en place de la cuve sous un agitateur à vitesse variable avec un hélice de mélange adapté aux mélanges de liquides par rapport à la taille de la cuve avec un temps de mélange environ 20 minutes à une vitesse de 700 t/minute. Le mélange peut également se faire avec un agitateur de type agitateur vibrationnel sur des emballages de 1 à 20 litres dans lesquelles les différents constituants liquides ont été dosés. Le mélange se fait après fermeture du couvercle et secouage de l'emballage par le l'agitateur pendant un temps d'environ 5 minutes.
3 - Les contrôles des caractéristiques des peintures sont effectués en mesurant les paramètres suivants :
   - Pour la peinture liquide :
      - Densité (g/cm³)
      - Extrait sec
      - Viscosités
      - Stabilité
   - Pour le film sec :
      - Coordonnées colorimétriques
      - Opacité
      - Brillant de surface

Les formules de peintures préparées sont explicitées dans le tableau 5.

Les meilleurs résultats sont obtenus avec les concentrés comprenant les copolymères n° 5 et 8.

## Revendications

1. Concentré liquide de pigments de particules solides hybrides minérales et organiques de 0.5 à 2 µm, de préférence avec au moins une proportion pondérale relative de molécules organiques de colorants dans les dits pigments de particules solides hybrides de 1 à 45%, utiles pour la fabrication de peintures comprenant un solvant aqueux ou organique, comprenant un copolymère greffé comprenant au moins trois séquences de natures chimiques distinctes, parmi lesquelles au moins une séquence d'ancrage apte à s'absorber sur des particules solides, au moins une séquence à caractère hydrophobe et au moins une séquence à caractère hydrophile, **caractérisé en ce qu'**il comprend undit copolymère constitué de :
1/ 5 à 40 %, de préférence 15 à 35 %, de préférence encore 20 à 30 % en teneur massique de dite(s) séquence(s) d'ancrage constituée(s) par un copolymère linéaire constitué à partir d'au moins deux unités monomériques distinctes comprenant :
a/ un premier monomère avec au moins un groupement azoté basique introduit à partir d'un ou plusieurs composé(s) choisi(s) parmi les vinylpyridine et de préférence aminoalkyl(méth)acrylate de formule I suivante : 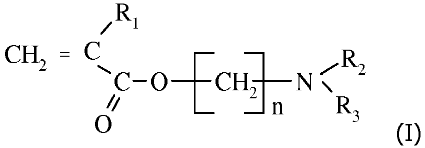 où R₁ est un atome d'hydrogène ou un radical (C1-C4) alkyle ; R₂ et R₃ identiques ou différents représentent chacun un hydrogène ou un radical (C1-C4) alkyle, n = 0 à 6, et
b/ un second monomère de la séquence d'ancrage est constitué par un monomère de formule II suivante: 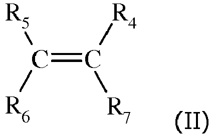 dans laquelle :
- R₄, R₅, R₆ sont identiques ou différents et représentent chacun un hydrogène ou un radical alkyle en C1-C4, de préférence un hydrogène,
- R₇ représente un groupe aromatique comprenant un groupement phényle éventuellement substitué,
- la teneur massique en dit premier monomère par rapport audit second monomère étant de 40 à 60 %, de préférence d'environ 50 %, et
2/ 25 à 90 %, de préférence 40 à 80 %, de préférence encore 50 à 70 % de teneur massique dedite(s) séquence(s) hydrophobe(s) obtenues à partir d'un macromonomère de formule (III) suivante : 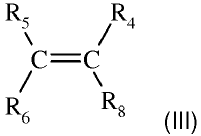 dans laquelle :
- R₄, R₅, R₆ sont identiques ou différents et représentent chacun un hydrogène ou un radical alkyle en C1-C4, et
- R₈ est constituée par un polymère dont les unités monomériques comportent des groupements - COOR₁₀ dans lequel R₁₀ est un alkyle en C1-C10 éventuellement substitué, de préférence un alkyle en C2-C8 éventuellement substitué par un hydroxyl, et
3/ de 5 à 70 %, de préférence 15 à 30 %, de préférence encore 10 à 20 % de teneur(s) massique(s) séquence(s) hydrophile(s) obtenues à partir d'un macromonomère de formule (IV) suivante : 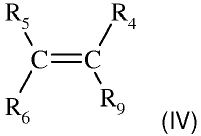
- R₄, R₅, R₆ sont identiques ou différents et représentent chacun un hydrogène ou un radical alkyle en C1-C4, et
- R₉ est une séquence à caractère hydrophile comprenant une séquence de polyéthylène glycol (a) substituée par un groupe alkoxy terminal ou (b) reliée à une séquence polypropylène glycol.

2. Concentré liquide de pigments de particules solides hybrides selon la revendication 1, **caractérisé en ce que** lesdites particules solides hybrides comprennent des particules minérales à structure creuse ou poreuse, remplies de pigments colorants organiques, de préférence avec au moins une proportion pondérale relative de pigments organiques colorants dans les dits pigments de particules solides hybrides de 1 à 30.%.

3. Concentré liquide de pigments de particules solides hybrides selon la revendication 2, **caractérisé en ce que** lesdites particules hybrides comprennent des particules minérales d'argile sous forme de fibres creuses dénommée sépiolite à l'intérieur desquelles fibres des pigments organiques colorantes d'origine végétale sont introduites.

4. Concentré liquide de pigments de particules solides hybrides selon l'une des revendications 1 à 3, **caractérisé en ce que** lesdites particules hybrides comprennent des particules de complexes de pigments réfléchissants les rayonnements infra rouge (IR) complexés à des molécules organiques de colorants de préférence avec au moins une proportion pondérale relative de molécules organiques colorants dans les dits pigments de particules solides hybrides de 1,5 à 15%.

5. Concentré liquide de pigments de particules solides hybrides selon la revendication 4, **caractérisé en ce que** lesdites particules de complexes de pigments réfléchissants les rayonnements infra rouge (IR) comprennent des oxydes métalliques blancs de préférence le dioxyde de titane de forme cristalline rutile, ou des oxydes métalliques noirs de préférence l'oxyde de chrome.

6. Concentré liquide de pigments de particules solides hybrides selon l'une des revendications 1 à 5, **caractérisé en ce que** dans la séquence hydrophile R₉ est obtenue à partir d'un macromonomère, de méthacrylate de polypropylène glycol-éthylène glycol R₉ étant une séquence de polypropylène glycol substituée par une séquence terminale de polyéthylène glycol, de préférence de masse moléculaire supérieure ou égale à 500.

7. Concentré liquide de pigments de particules solides hybrides selon l'une des revendications 1 à 5, **caractérisé en ce que** ladite séquence hydrophile est obtenue à partir d'un macromonomère de méthacrylate de méthoxy polyethylène glycol, R₉ étant une séquence à caractère hydrophile comprenant une séquence de polyéthylène glycol substituée par un groupe méthoxy terminal de préférence de masse moléculaire supérieure ou égale à 500.

8. Concentré liquide de pigments de particules solides hybrides selon l'une des revendications 1 à 7, **caractérisé en ce que** dans ladite séquence d'ancrage, ledit premier monomère est le monomère de méthacrylate de 2-diméthylaminoéthyle et ledit second monomère est le styrène.

9. Concentré liquide de pigments de particules solides hybrides selon l'une des revendications 1 à 8, **caractérisé en ce que** ladite séquence hydrophobe est obtenue à partir d'un macromonomère de polymère d'unités de méthacrylate d'éthylhéxyle.

10. Concentré liquide de pigments de particules solides hybrides selon l'une des revendications 1 à 9, **caractérisé en ce que** la masse moléculaire du copolymère greffé est comprise entre 5000 et 25000, de préférence entre 10000 et 20000.

11. Concentré liquide de pigments de particules solides hybrides selon l'une des revendications 7 à 9 **caractérisé en ce que** le dit copolymère comprend :
- une dite séquence hydrophile obtenue à partir d'un macromonomère.de méthacrylate de polypropylène glycol-éthylène glycol, ou un macromère de methacrylate de méthoxy polyethylèneglycol,
- une dite séquence d'ancrage obtenu avec undit premier monomère qui est le monomère de méthacrylate de 2-diméthylaminoéthyle et ledit second monomère qui est le styrène ; et
- une dite séquence hydrophobe obtenue à partir d'un macromonomère de polymère-de méthacrylate d'éthylhéxyle.

12. Concentré liquide de pigments de particules solides hybrides selon l'une des revendications 1 à 11, **caractérisé en ce qu'**il comprend un solvant aqueux.

13. Concentré liquide de pigments de particules solides hybrides selon l'une des revendications 1 à 12, **caractérisé en ce qu'**il comprend un extrait sec de pigments de particules solides hybrides supérieur ou égal à 45%.

14. Concentré liquide de pigments de particules solides hybrides selon l'une des revendications 1 à 13, **caractérisé en ce que** la teneur pondérale de l'extrait sec desdits copolymères greffés est de 10 à 30% du poids dudit concentré liquide.

15. Procédé de préparation de peinture, **caractérisé en ce qu'**on utilise un concentré liquide de de pigments de particules solides hybrides selon l'une des revendications 1 à 14, que l'on mélange avec les autres constituants de la peinture.

## Patentansprüche

1. Flüssiges Konzentrat von Pigmenten aus mineralischen und organischen hybriden festen Partikeln von 0,5 bis 2 µm, vorzugsweise mit mindestens einem relativen Gewichtsanteil an organischen Farbstoffmolekülen in den Pigmenten von hybriden festen Partikeln von 1 bis 45 %, die für die Herstellung von ein wässriges oder organisches Lösungsmittel umfassenden Farben geeignet sind und die ein Pfropfcopolymer umfassen, das mindestens drei Sequenzen unterschiedlicher chemischer Natur umfasst, darunter mindestens eine Verankerungssequenz, die geeignet ist, sich auf den festen Partikeln zu absorbieren, mindestens eine Sequenz hydrophober Natur und mindestens eine Sequenz hydrophiler Natur, **dadurch gekennzeichnet, dass** es ein solches Copolymer umfasst, bestehend aus:
1) 5 bis 40 Masse-%, vorzugsweise 15 bis 35 Masse-%, noch bevorzugter 20 bis 30 Masse-% der Verankerungssequenz(en), die aus einem linearen Copolymer besteht (bestehen), das aus mindestens zwei unterschiedlichen Monomereinheiten besteht, umfassend:
a) ein erstes Monomer mit mindestens einer basischen Stickstoffgruppe, eingeführt aus einer oder mehreren Verbindung(en), ausgewählt aus Vinylpyridin und vorzugsweise Aminoalkyl(meth)acrylat der folgenden Formel I: 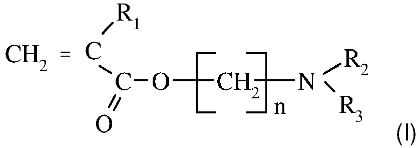 wobei R₁ ein Wasserstoffatom oder ein (C1-C4)-Alkylrest ist, R₂ und R₃, die gleich oder verschieden sein können, jeweils ein Wasserstoffatom oder einen (C1-C4)-Alkylrest darstellen, n = 0 bis 6 ist, und
b) ein zweites Monomer der Verankerungssequenz besteht aus einem Monomer der folgenden Formel II: 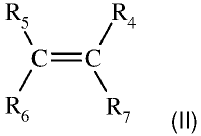 wobei:
- R₄, R₅, R₆ gleich oder verschieden sind und jeweils Wasserstoff oder einen C1-C4-Alkylrest darstellen, vorzugsweise Wasserstoff,
- R₇ eine aromatische Gruppe darstellt, die eine gegebenenfalls substituierte Phenylgruppe umfasst,
- der Massengehalt des ersten Monomers in Bezug auf das zweite Monomer 40 bis 60 %, vorzugsweise etwa 50 %, beträgt und
2) 25 bis 90 Masse-%, vorzugsweise 40 bis 80 Masse-%, noch bevorzugter 50 bis 70 Masse-% der genannten hydrophoben Sequenz(en), erhalten aus einem Makromonomer der folgenden Formel (III): 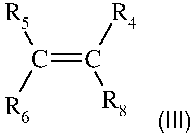 wobei:
- R₄, R₅, R₆ gleich oder verschieden sind und jeweils Wasserstoff oder einen C1-C4-Alkylrest darstellen, und
- R₈ aus einem Polymer besteht, dessen Monomereinheiten -COOR₁₀-Gruppen enthalten, in denen R₁₀ ein gegebenenfalls substituiertes C1-C10-Alkyl ist, vorzugsweise ein gegebenenfalls durch Hydroxyl substituiertes C2-C8-Alkyl, und
3) 5 bis 70 Masse-%, vorzugsweise 15 bis 30 Masse-%, noch bevorzugter 10 bis 20 Masse-% hydrophiler Sequenz(en), die aus einem Makromonomer der folgenden Formel (IV) erhalten wird (werden): 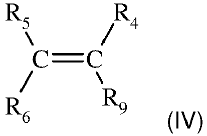 wobei
- R₄, R₅, R₆ gleich oder verschieden sind und jeweils Wasserstoff oder einen C1-C4-Alkylrest darstellen, und
- Rg eine Sequenz hydrophiler Natur darstellt, die eine Polyethylenglykol-Sequenz umfasst, die (a) durch eine endständige Alkoxygruppe substituiert ist oder (b) an eine Polypropylenglykol-Sequenz gebunden ist.

2. Flüssiges Konzentrat von Pigmenten aus hybriden festen Partikeln nach Anspruch 1, **dadurch gekennzeichnet, dass** die hybriden festen Partikel mineralische Partikel mit einer hohlen oder porösen Struktur umfassen, die mit organischen Farbpigmenten gefüllt sind, vorzugsweise mit mindestens einem relativen Gewichtsanteil an organischen Farbpigmenten in den Pigmenten aus hybriden festen Partikeln von 1 bis 30 %.

3. Flüssiges Konzentrat von Pigmenten aus hybriden festen Partikeln nach Anspruch 2, **dadurch gekennzeichnet, dass** die hybriden Partikel mineralische Tonpartikel in Form von Hohlfasern, Sepiolith genannt, umfassen, in die organische Farbpigmente pflanzlichen Ursprungs eingebracht sind.

4. Flüssiges Konzentrat von Pigmenten aus hybriden festen Partikeln nach einem der Ansprüche 1 bis 3, **dadurch gekennzeichnet, dass** die hybriden Partikel aus Pigmentkomplexen umfassen, die Infrarotstrahlung (IR) reflektieren und mit organischen Farbstoffmolekülen komplexiert sind, vorzugsweise mit einem relativen Gewichtsanteil an organischen Farbstoffmolekülen in den Pigmenten aus hybriden festen Partikeln von 1,5 bis 15 %.

5. Flüssiges Konzentrat von Pigmenten aus hybriden festen Partikeln nach Anspruch 4, **dadurch gekennzeichnet, dass** die Partikel aus Pigmentkomplexen, die Infrarotstrahlung (IR) reflektieren, weiße Metalloxide, vorzugsweise Titandioxid in rutilkristalliner Form, oder schwarze Metalloxide, vorzugsweise Chromoxid, umfassen.

6. Flüssiges Konzentrat von Pigmenten aus hybriden festen Partikeln nach einem der Ansprüche 1 bis 5, **dadurch gekennzeichnet, dass** in der hydrophilen Sequenz Rg aus einem Makromonomer erhalten wird, von Polypropylenglykol-Ethylenglykolmethacrylat, wobei Rg eine Polypropylenglykolsequenz ist, die durch eine Polyethylenglykol-Endsequenz substituiert ist, vorzugsweise mit einem Molekulargewicht von größer oder gleich 500.

7. Flüssiges Konzentrat von Pigmenten aus hybriden festen Partikeln nach einem der Ansprüche 1 bis 5, **dadurch gekennzeichnet, dass** die hydrophile Sequenz ausgehend von einem Methoxy-Polyethylenglykol-Methacrylat-Makromonomer erhalten wird, wobei Rg eine Sequenz hydrophiler Natur ist, die eine Polyethylenglykol-Sequenz umfasst, die durch eine endständige Methoxygruppe substituiert ist, vorzugsweise mit einem Molekulargewicht von größer oder gleich 500.

8. Flüssiges Konzentrat von Pigmenten aus hybriden festen Partikeln nach einem der Ansprüche 1 bis 7, **dadurch gekennzeichnet, dass** in der Verankerungssequenz das erste Monomer ein 2-Dimethylaminoethylmethacrylat-Monomer und das zweite Monomer Styrol ist.

9. Flüssiges Konzentrat von Pigmenten aus hybriden festen Partikeln nach einem der Ansprüche 1 bis 8, **dadurch gekennzeichnet, dass** die hydrophobe Sequenz aus einem Polymermakromonomer von Ethylhexylmethacrylat-Einheiten erhalten wird.

10. Flüssiges Konzentrat von Pigmenten aus hybriden festen Partikeln nach einem der Ansprüche 1 bis 9, **dadurch gekennzeichnet, dass** das Molekulargewicht des Pfropfcopolymers zwischen 5000 und 25000, vorzugsweise zwischen 10000 und 20000, liegt.

11. Flüssiges Konzentrat von Pigmenten aus hybriden festen Partikeln nach einem der Ansprüche 7 bis 9, **dadurch gekennzeichnet, dass** das Copolymer umfasst:
- eine hydrophile Sequenz, erhalten aus einem Makromonomer von Polypropylenglykol-Ethylenglykol-Methacrylat oder einem Makromonomer von Methoxy-Polyethylenglykol-Methacrylat,
- eine Verankerungssequenz, erhalten mit dem ersten Monomer, bei dem es sich um das Monomer von 2-Dimethylaminoethylmethacrylat handelt, und dem zweiten Monomer, bei dem es sich um Styrol handelt, und
- eine hydrophobe Sequenz, erhalten aus einem Makromonomer von Ethylhexylmethacrylatpolymer.

12. Flüssiges Konzentrat von Pigmenten aus hybriden festen Partikeln nach einem der Ansprüche 1 bis 11, **dadurch gekennzeichnet, dass** es ein wässriges Lösungsmittel umfasst.

13. Flüssiges Konzentrat von Pigmenten aus hybriden festen Partikeln nach einem der Ansprüche 1 bis 12, **dadurch gekennzeichnet, dass** es einen Trockenextrakt von Pigmenten aus hybriden festen Partikeln von mehr als oder gleich 45 % umfasst.

14. Flüssiges Konzentrat von Pigmenten aus hybriden festen Partikeln nach einem der Ansprüche 1 bis 13, **dadurch gekennzeichnet, dass** der Gewichtsgehalt des Trockenextrakts der Pfropfcopolymere 10 bis 30 Gew.-% des flüssigen Konzentrats beträgt.

15. Verfahren zur Herstellung von Farbe, **dadurch gekennzeichnet, dass** ein flüssiges Konzentrat von Pigmenten aus hybriden festen Partikeln nach einem der Ansprüche 1 bis 14 verwendet wird, das mit den anderen Bestandteilen der Farbe gemischt wird.

## Claims

1. A liquid concentrate of pigments of mineral and organic hybrid solid particles of 0.5 to 2 µm, preferably with at least a relative weight proportion of organic dye molecules in said pigments of hybrid solid particles of 1 to 45%, useful for the manufacture of paints comprising an aqueous or organic solvent, comprising a graft copolymer containing at least three sequences of different chemical nature, among which at least one anchor sequence capable of being absorbed on solid particles, at least one hydrophobic sequence and at least one hydrophilic sequence, **characterized in that** it comprises a said copolymer consisting of:
1/ 5 to 40 wt%, preferably 15 to 35 wt%, and more preferably 20 to 30 wt% of said anchor sequence(s) consisting of a linear copolymer formed from at least two different monomer units comprising:
a/ a first monomer with at least one basic nitrogen-containing group added from one or more compound(s) selected from the vinylpyridines and preferably aminoalkyl(meth)acrylate of the following formula I: 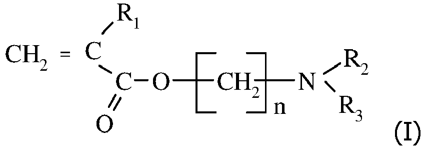 where R₁ is a hydrogen atom or a (C1-C4) alkyl radical; R₂ and R₃, which may be identical or different, each represent hydrogen or a (C1-C4) alkyl radical, n = 0 to 6, and
b/ a second monomer of the anchor sequence consists of a monomer of the following formula II: 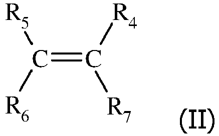 wherein:
- R₄, R₅, R₆ are identical or different and each represent hydrogen or a (C1-C4) alkyl radical, preferably a hydrogen,
- R₇ represents an aromatic group comprising an optionally substituted phenyl group,
- the weight content of said first monomer relative to said second monomer being 40 to 60 wt%, preferably about 50 wt%, and
2/ 25 to 90 wt%, preferably 40 to 80 wt%, more preferably 50 to 70 wt% of the weight content of said hydrophobic sequence(s) obtained from a macromonomer of the following formula (III): 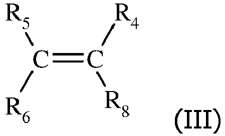 wherein:
- R₄, R₅ and R₆ are identical or different and each represent hydrogen or a C1-C4 alkyl radical, and
- R₈ consists of a polymer whose monomer units contain -COOR₁₀ groups in which R₁₀ is an optionally substituted C1-C10 alkyl, preferably a C2-C8-alkyl optionally substituted by a hydroxyl, and
3/ from 5 to 70 wt%, preferably 15 to 30 wt%, more preferably 10 to 20 wt% of the weight content(s) of hydrophilic sequence(s) obtained from a macromonomer of the following formula (IV): 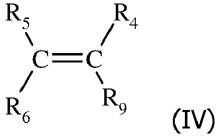
- R₄, R₅, R₆ are identical or different and each represent a hydrogen or a C1-C4 alkyl radical, and
- R₉ is a hydrophilic sequence comprising a polyethylene glycol sequence (a) substituted by a terminal alkoxy group or (b) linked to a polypropylene glycol sequence.

2. The liquid concentrate of pigments of hybrid solid particles as claimed in claim 1, **characterized in that** said hybrid solid particles comprise mineral particles having a hollow or porous structure, filled with organic dye pigments, preferably with at least a relative weight proportion of organic dye pigments in said pigments of hybrid solid particles of 1 to 30 wt%.

3. The liquid concentrate of pigments of hybrid solid particles as claimed in claim 2, **characterized in that** said hybrid particles comprise clay mineral particles in the form of hollow fibres called sepiolite, inside which fibres of organic dye pigments of plant origin are added.

4. The liquid concentrate of pigments of hybrid solid particles as claimed in one of claims 1 to 3, **characterized in that** said hybrid particles comprise particles of complexes of infrared (IR)-radiation-reflecting pigment complexed with organic dye molecules preferably with at least a relative weight proportion of organic dye molecules in said pigments of hybrid solid particles of 1.5 to 15 wt%.

5. The liquid concentrate of pigments of hybrid solid particles as claimed in claim 4, **characterized in that** said particles of complexes of infrared (IR)-radiation-reflecting pigment complexed with particles comprise white metal oxides, preferably titanium dioxide of rutile crystalline form, or black metal oxides, preferably chromium oxide.

6. The liquid concentrate of pigments of hybrid solid particles as claimed in one of claims 1 to 5, **characterized in that** in the hydrophilic sequence R₉ is obtained from a macromonomer of polypropylene glycol-ethylene glycol methacrylate, R₉ being a polypropylene glycol sequence substituted by a terminal polyethylene glycol sequence, preferably having a molecular weight greater than or equal to 500.

7. The liquid concentrate of pigments of hybrid solid particles as claimed in one of claims 1 to 5, **characterized in that** said hydrophilic sequence is obtained from a macromonomer of methoxy polyethylene glycol methoxy methacrylate, R₉ being a hydrophilic sequence comprising a polyethylene glycol sequence substituted by a terminal methoxy group, preferably with a molecular weight greater than or equal to 500.

8. The liquid concentrate of pigments of hybrid solid particles as claimed in one of claims 1 to 7, **characterized in that**, in said anchor sequence, said first monomer is 2-dimethylaminoethyl methacrylate monomer and said second monomer is styrene.

9. The liquid concentrate of pigments of hybrid solid particles as claimed in one of claims 1 to 8, **characterized in that** said hydrophobic sequence is obtained from a polymer macromonomer of ethylhexyl methacrylate units.

10. The liquid concentrate of pigments of hybrid solid particles as claimed in one of claims 1 to 9, **characterized in that** the molecular weight of the graft copolymer is between 5000 and 25000, preferably between 10000 and 20000.

11. The liquid concentrate of pigments of solid hybrid particles as claimed in one of claims 7 to 9, **characterized in that** said copolymer comprises:
- a said hydrophilic sequence obtained from a macromonomer of polypropylene glycol-ethylene glycol methacrylate, or a macromer of methoxy polyethyleneglycol methacrylate,
- a said anchor sequence obtained with a said first monomer which is 2-dimethylaminoethyl methacrylate monomer and said second monomer which is styrene; and
- a said hydrophobic sequence obtained from a macromonomer of ethylhexyl methacrylate polymer.

12. The liquid concentrate of pigments of hybrid solid particles as claimed in one of claims 1 to 11, **characterized in that** it comprises an aqueous solvent.

13. The liquid concentrate of pigments of hybrid solid particles as claimed in one of claims 1 to 12, **characterized in that** it comprises a dry extract of pigments of hybrid solid particles greater than or equal to 45%.

14. The liquid concentrate of pigments of solid hybrid particles as claimed in one of claims 1 to 13, **characterized in that** the weight content of the dry extract of said graft copolymers is from 10 to 30 wt% of said liquid concentrate.

15. A process for preparing paint, **characterized in that** a liquid concentrate of pigments of hybrid solid particles as claimed in one of claims 1 to 14 is used, that it is mixed with the other components of the paint.
